# EUROPEAN PATENT SPECIFICATION

(11) **EP 3 429 975 B1**
(45) Date of publication and mention of the grant of the patent: **19.01.2022**
(21) Application number: 16719122.0
(22) Date of filing: 15.03.2016
(51) Int. Cl.: C03C 23/00, C03B 29/02

(54) **RESTORATION OF VITREOUS SURFACES USING LASER TECHNOLOGY**
WIEDERHERSTELLUNG VON GLASFLÄCHEN MIT LASERTECHNIK
RESTAURATION DE SURFACES VITREUSES À L'AIDE D'UNE TECHNOLOGIE LASER

(43) Date of publication of application: 23.01.2019
(73) Proprietor: Institute of Electronic Structure and Lasers Foundation for Research and Technology Hellas (Ieslforth), 700 13 Heraklion, Crete (GR)
(72) Inventor: CHATZIGIANNAKIS, Konstantinos, GR70013 (GR); POULI, Paraskevi, GR70013 (GR); MELESSANAKI, Kristalia, GR70013 (GR); BERNIKOLA, Maria, Eirini, GR27053 (GR); MIMOSO, Joao, Manuel, 1700-066 Lisboa (PT); PEREIRA, Silvia, Raquel, 1700-066 Lisboa (PT)
(74) Representative: Gallego Jiménez, José Fernando
(86) International application number: PCT/GR2016/000011
(87) International publication number: WO 2017/158390

(56) References cited:
- EP-A1- 0 610 556
- US-A- 4 731 254
- US-A- 6 064 034
- US-A1- 2003 020 560

## Description

The present invention relates to the application of laser technology for amending or restoring existing surface defects or pathologies on vitreous surfaces, such as glasses and glazes, which may be attached to substrates such as ceramics or other support materials.

### BACKGROUND

At present, extensive study has been carried out concerning the application of lasers on vitreous surfaces.

Chmielewska at al. (Proc. SPIE 8703) investigated a) the change of the color of a specially prepared ceramic as well as b) the fusion of ceramic powder and ceramic substrate due to laser irradiation, whereas in US patent US4769310A a process for laser marking of ceramic materials, glass ceramics and glasses with the use of a laser is suggested. The above mentioned processes aim in the decoration of a vitreous surface and not to its restoration.

Polic et al. (Ceramics International, 2014) and Gaspar et al. (Studies in Conservation 45, 2000, pp. 189-200) explored the possibility of using pulsed Carbon Dioxide (CO₂) and Nd:YAG lasers in order to remove unwanted overlying material from the surface of a number of ceramic tiles belonging to different historic eras. These studies provide important information concerning the interaction of lasers with glazed ceramic substrates. However in these studies laser irradiation has been employed exclusively for the removal of over-layers from the vitreous surface and not for its restoration.

I. Kepiro et al. (Applied Surface Science 253, 2007, pp. 7798-7805) and K. Osvay et al. (Applied Surface Science 252, 2006, pp. 4516-4522) attempted to use laser radiation in order to repair small imperfections (0.1mm - 0.5mm and depth <0.1mm) by focusing their research only on white glazed China surfaces. They describe a process where new correction material is added to fill holes and imperfections (mainly created during the firing process of white porcelain) while the laser treatment is performed using a pulsed CO₂ laser. In order to eliminate cracks pre-heating and slowed-cooling-rate processes have been tried with the use of a laser. The specific process is based only on the repair of small dimension pathologies of white glazed China surfaces without including an automated or semi-automated procedure and always by inserting a new material in order to fill holes or imperfections and not by melting the already existed one.

Patent CN102627411 refers to a method for repairing a glass substrate crack. The method requires a binder which penetrates into the crack in order to bond the two sides of the crack. Then a mini-watt laser is used to melt the glass and fuse the two sides of the glass. The method is applied on production materials.

Patent FR2297815 refers to a method of sealing a cavity in a device made of glass with the use of a laser beam. The laser beam is directed on the walls surrounding the opening until the glass is melted and seals the opening. The method is applied on devices like liquid crystal displays.

Patent EP0610556 A1 describes a procedure where a laser is used for localized glazing on ceramic articles. The technique is mainly applied for decorating purposes but it can also be applied for glaze defects repairing. These defects are limited to fissures or cracks and do not extend to larger cracks such as pinholes or lacunas. Moreover the described procedure does not include an automated detection of defects and automated or semi-automated application of the defect curing.

### SUMMARY

The method proposed in this disclosure is based on the restoration of existing pathologies on vitreous surfaces by fusing either an already existing material, or an additive one, in order to mend and repair the aforesaid pathologies. The present invention may be applied on objects like glazed ceramic tiles, porcelain objects, glass objects, faience, glass-ceramics, or any vitreous surface.

The suggested methodology is particularly useful on the restoration of vitreous surfaces of Cultural Heritage (CH) importance. Glazed ceramics and glass made artefacts constitute an integral and significant part of our CH and have an important role in archaeology as they are among the most common findings in archaeological sites and excavations. The history of ceramics begins with the oldest civilizations while their stabilisation and decoration with glazed material is dated back to 600 B.C. from the Babylonians and Assyrians. The glazed bricks/ceramics were very common in Mesopotamia, whereas their use as a wall covering component, in different shapes and colors, is attributed to the Islamic Empires. In the Iberian Peninsula the ceramic tiles were introduced by the Moors. These ceramic tiles are most commonly found as decorative tiles called "Azulejos".

Much of the great interest on ceramics lies in the possibility of being decorated with colored glazes. Brilliant colors in different hues can be produced by varying their firing temperature and atmosphere. Texture, luster, transparency, and brilliance can be also controlled by varying their composition and firing parameters. Glazes can be produced over a wide range of temperatures because of the differences in fluxes and also because of the effect of varying proportions.

Glaze is usually applied on a surface as a liquid suspension of raw glaze in water. The surface and glaze mixture are fired together and consequently the glaze melts and attaches to the surface. As far as it concerns the functional aspect of glaze, glazing of ceramics has been used in order to seal the inherent porosity of ceramic substrate, as well as to weatherproof brick or tiles. In addition, as regards the decorative aspect of glaze, glazes form a variety of surface finishes, including degrees of glossy or matte finish and color. Raw materials of ceramic glazes generally include silica, which is the main glass former, and fluxes such as alkaline oxides and others that decrease the fusing temperature of the mixture. Colorants, such as iron oxide, copper carbonate or cobalt carbonate etc. are used to modify the visual appearance of the fired glaze. Glaze for lead-glazed ceramics is transparent and glossy after firing.

Among the glazed ceramics, Rennaissance majolica plates and vases and Azulejo tiles hold an outstanding role. Azulejos are a characteristic example of ceramic artefacts with glazed - vitreous surface attached to a non-vitreous substrate. They are considered to be an integral part of the Italian, Flemish, Dutch, Portuguese, Spanish and Central and South American Culture and tradition. From the 16th to the 20th century they were frequently used e.g. in Portugal for the decoration of interior and exterior parts of several types of buildings such as churches, palaces or houses. The purpose of their use was not only for decoration but also as a functional architectural element, as they were used for temperature control in buildings. Up to 17th century the majolica process has been used for the manufacture of this type of tiles. The specific process is based on the application of a glazed coat on a terracotta ceramic tile. These tiles were significantly influenced from the white and blue Chinese Ming porcelain, which was imported by the Dutch East India Company. In the colonial Brazil, ceramic tiles from Portugal and Holland were rapidly incorporated to the national Culture.

Unfortunately, Azulejo tiles, being particularly susceptible to environmental conditions, suffer from several pathologies and alterations due to the effects of ageing, moisture and temperature fluctuations, crystallization of salts, oxidative agents or even pre-existing manufacturing defects. These pathologies result in loss of the glaze and thus loss of the pictorial layer. The loss of the specific part of the tile may lead in further degradation, as it allows moisture to penetrate deeper in the structure and possibly create further stresses that may cause irreversible damage on the "glaze - ceramic body" interface.

The pathologies of vitreous surfaces can be in general classified in three major categories:
a) Cracks in the glazed- vitreous surface: cracks that are formed due to the inhomogeneous contraction and expansion of the glazed surface and substrate as a result of temperature and humidity fluctuation,
b) Pin-holes: small holes in the glazed surface that provide evaporation routes to the moisture originating from the walls and
c) Lacunas: larger areas where the glaze layer is missing. Lacunas are formed by the loss of glaze with or without attached substrate.

The aforementioned pathologies allow the penetration of moisture into the ceramic biscuit thus provoking and accelerating its deterioration. This is particularly intense in the case when soluble salts are present in the water/ moisture, as their crystallization under the imperfection (crack, pin-hole), and specifically in the empty space between the ceramic substrate and the glaze, will initiate lifting of the glaze forming thus a bubble that, in time, breaks resulting in material loss (lacuna).

Up to the present, the restoration of glazed ceramic artefacts required special and time consuming treatment. A corresponding example based on the case of azulejos glazed ceramic tiles is described by Pereira et al. in the framework of the CERAZUL project (S. Pereira et al., "Cerazul: assessment and development of materials and techniques for the conservation of historic azulejos", Azulejar, 2012). Azulejos are usually decorating walls and the standard conservation treatment requires the removal from their original place and their re-installation after the necessary conservation treatment. In order to repair structural defects as the already mentioned ones, the application of a new glaze and the firing of the whole tile are needed in order to achieve the integration of the glaze onto the ceramic substrate.

The present invention aims to introduce devices and methods of in-situ restoration of vitreous surfaces where a laser is used in order to fuse and fill pathologies without removing the artwork from its initial position.

In a first aspect, a device to restore a fissured area of a vitreous surface is disclosed. The device comprises a laser source to generate a laser beam; a beam positioning unit to control a first direction and a second direction, perpendicular to the first, of the laser beam; a spot-size modification unit to modify a spot-size of the laser beam; a controller, coupled to the laser source and to the beam positioning unit, configured to shape the spot-size of the laser beam according to a size of the fissured area and to direct the laser beam to the fissured area to melt the vitreous surface around the fissured area and fuse the melted vitreous surface in the fissured area.

The invention is focused mainly on any artwork/object with vitreous surface which may be attached to a non-vitreous substrate (e.g. ceramic) with emphasis to colored glazed ceramic tiles. The methodology may be applied to other types of vitreous surfaces including glasses, pottery, stoneware and porcelain. Pathologies of vitreous surfaces may, but not only/restricted, be formed due to manufacturing imperfections, due to environmental impact and due to natural ageing. The dimensions of these pathologies vary according to their position, the original location of the artwork/object, its age etc.

The present invention suggests the in-situ restoration/conservation of the pathologies' and structural defects. The use of a laser beam provides the ability to selectively restore each of the aforementioned pathologies leaving intact the rest of the artwork/object and with no need of removing and re-firing the artwork/object. The idea of applying laser irradiation to restore an existing alteration/pathology lies on the interaction and thermal effect of the laser beam with the glaze.

In the case of an existing crack a laser beam is launched directly on the defected/cracked area. The laser beam scans the defected/cracked area in order to perform the restoration, which is achieved via the melting of the surroundings of the defected area. The melted material flows and fills the crack. After the re-solidification of the material the crack is restored.

The melting of the material can be achieved mainly by exposure to continuous or long-pulsed infrared radiation due to thermal effects that the specific irradiation may cause on materials. The higher the radiation emission and the radiation absorbance from the material are, the stronger is the thermal effect. The thermal impact also varies with the radiation wavelength. A laser is preferably the most suitable radiation emitter due to its properties; high intensity and very narrow beam, which allows the selective and controlled processing of areas in the scale of micrometers.

The laser processing parameters, namely laser power and beam spot-size, scanning speed and scanning topography (direction), may be adapted according to the specific requirements of the appropriate conservation approach (re-structure existing material or fill-up with new) which is closely related to the various glaze pathologies (cracks, pin-holes, lacunas) and refers to a specific laser-material interaction process. The customized and fine tuning of the above mentioned parameters results to selection of the required beam intensity, which will controllably melt the predefined amount and extension of the crack surroundings.

The melting point of a glazed surface closely depends on the composition of the vitreous material. Melting temperatures for commonly used vitreous materials typically range from approximately 600° C to approximately 1600° C. Higher melting temperatures may be required for special materials. The beam parameters need to be properly adjusted so as the beam intensity to be high enough to melt the vitreous surface, but not that high to penetrate and reach the substrate -if a substrate exists-or deeper un-defected layers of the vitreous material and modify them. The modification of the substrate may result to change of the substrate properties e.g. from crystalline to amorphous, or even to discoloration of the substrate and/or the painted decoration.

Special attention has to be given to the dimensions of the laser beam (spot-size) which will interact with the surface of interest. The careful adjustment of the spot-size leads to the appropriate coverage of an area which must be larger than the crack size. Moreover, a uniform distribution of the laser energy on the surface of the artwork is achieved. This ensures uniform melting of crack surroundings which results to successful and homogenous adhesion after the glaze is re-solidified.

Another important parameter for implementing the crack mending is the scanning topography (i.e. direction). Depended on the type of crack, scanning directions across or along the crack can be selected.

Once the laser beam reaches the glazed surface that surrounds the crack and due to the high increase of temperature, the glaze melts. In the melted condition the glaze penetrates inside the crack that needs to be restored. After its solidification the glaze is adhered to the substrate and fills the gap created by the crack.

Last but not least another crucial parameter to be taken into account in this laser based methodology is the control and regulation of the surrounding conditions (temperature) of the treated area before, during and after the treatment. When a vitreous structure is treated with laser it suffers abrupt phase transitions. Prior to laser treatment the glaze is in a solid state in room temperature. Upon laser irradiation the glaze melts due to an abrupt raise of temperature. After irradiation the melted glaze is being solidified again immediately when exposed to room temperature. This abrupt transition from solid to melt state and then again to solid, usually results on the appearance of micro-cracks on the vitreous surface due to thermal stresses. In order to avoid the appearance of micro-cracks a pre-heating and post-heating process is required. The pre-heating process is applied prior to laser irradiation in order to gradually raise the temperature of the surface and prepare it for the laser application, whereas the post-heating process gradually leads to a progressive decrease of the surface temperature to finally achieve the room temperature thus ensuring the absence of micro-cracks.

In both cases (pre-heating/post-heating) the externally applied thermal energy does not target only the defected area and its surroundings but instead affects a significantly broader area. The aim is to ensure that the externally applied thermal energy will penetrate homogeneously the bulk of the vitreous material and to a certain, controlled and safe extent, will also affect the substrate (if any). We have to note that the deeper is the penetration of the externally applied thermal energy into the glaze-substrate system, the more uniform the temperature distribution will be. The uniform temperature distribution ensures the gradual and proper temperature raise/decrease when the laser processing is applied. The pre-heating/post-heating process requires significantly longer duration compared to the duration of the actual laser-induced melting process.

Various heat sources can be used for the pre-heating/post-heating of the glaze-substrate system. Typical heat sources may be high efficiency electrical incandescent devices, hot air blowing devices, lasers or any other heat source. In the case of the laser solution the laser source can be the same to the one used for the processing. In this case the beam spot-size has to be significantly wider comparing to the spot-size used upon the melting procedure in order to homogeneously cover the surroundings of the defected area as described above.

The above described procedure can be either performed automatically or semi-automatically. In the automatically case a control unit will be needed to acquire, to process and to send the data to the sub-systems required to implement the process. Corresponding sub-systems can be the beam scanning unit, the spot-size modification unit etc. These units need to be motorized or semi-motorized in order to be able to receive and execute commands from the control unit. Additionally, an automatic defect recognition unit is required, which will acquire and send data to the control unit. The defect recognition unit may be comprised of a camera and the corresponding hardware/software. The software will grab images of the area to be restored via the camera. The images will be processed and the defected areas will be automatically detected. The defected areas coordinates will be extracted and transferred to the control unit. The control unit will send the coordinates as well as the processing parameters to the scanning system in order to process the defected area.

The above described cracks restoration procedure can be also followed in the case of pin-hole pathologies after minor changes/modifications. In the case of pin-hole pathologies, a small quantity of raw glaze, of the same or similar type to the one existing on the artwork's vitreous surface is being used in order to fill the gap/hole prior to the area's irradiation with laser. In many cases low melting point glaze powder is also mixed with the raw glaze in order to lower the fusion point of the mixture - and the mixture is applied on the pin-hole to cover its surface. After the raw glaze application the area may be preheated and then the laser beam scans the specific area. Following the laser scanning of the area, the irradiated raw glaze is well attached to the substrate and the pin hole is filled.

In the case of lacuna defects the process is differentiated as, due to the large size of the specific defect and the lack of substrate material (i.e. ceramic), a filling material is originally necessary in order to fix this gap. This correction material is applied with a spatula on the lacuna over the existing layers. After the correction of the lacuna gap/void, raw glaze is again applied to the surface and the laser beam scans the area to be treated following the methodology developed for the pin-hole cases.

In another aspect, a method of restoring a fissured area of a vitreous surface is disclosed. The method comprises generating a laser beam; controlling a first direction and a second direction, perpendicular to the first, of the laser beam; shaping the spot-size of the laser beam according to a size of the fissured area; and directing the laser beam to the fissured area to melt the vitreous surface around the fissured area and/or fuse the melted vitreous surface in the fissured area.

In yet another aspect, a computer program product is disclosed. The computer program product may comprise program instructions for causing a computing system to perform a method of restoring a fissured area of a vitreous surface according to examples disclosed herein.

The computer program product may be embodied on a storage medium (for example, a CD-ROM, a DVD, a USB drive, on a computer memory or on a read-only memory) or carried on a carrier signal (for example, on an electrical or optical carrier signal).

The computer program may be in the form of source code, object code, a code intermediate source and object code such as in partially compiled form, or in any other form suitable for use in the implementation of the processes. The carrier may be any entity or device capable of carrying the computer program.

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

### BRIEF DESCRIPTION OF THE DRAWINGS

Non-limiting examples of the present disclosure will be described in the following, with reference to the appended drawings, in which:
Figure 1a is a schematic representation cross-section of the defected surface before the restoration;
Figure 1b shows the cross-section of the defected surface after the restoration with a relatively narrow and thus intense beam;
Figure 1c shows the cross-section of the defected surface after the restoration with a beam of the appropriate spot-size and intensity;
Figure 2 is a schematic representation of a laser-based system to mend a defected vitreous area;
Figure 3 shows an example laser system;
Figure 4 shows a beam driving unit based on a galvanometric system;
Figure 5 shows an examined fragment;
Figure 6a shows a crack on the examined fragment;
Figure 6b shows the crack in magnification;
Figure 7a shows a cross section of the crack shown in Fig. 6a;
Figure 7b shows a a magnification of the cross section of the crack shown in Fig. 6b;
Figure 8 is an illustration of the scanning along a crack;
Figure 9a shows the crack after laser processing;
Figure 9b shows a magnification of the crack after laser processing;
Figure 10a shows a cross section of the crack after laser processing;
Figure 10b shows a magnification of the cross section of the crack after laser processing.

### DETAILED DESCRIPTION OF EXAMPLES

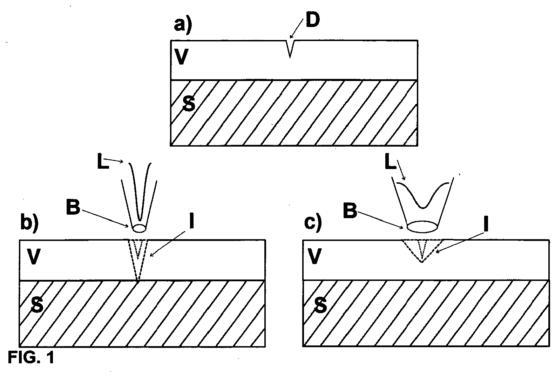

Figure 1a is a schematic representation cross-section of the defected surface before the restoration. V is the vitreous material, S is the substrate of the vitreous material, and D is the defected area. Figure 1b shows the cross-section of the defected surface after the restoration with a relatively narrow and thus intense beam. L is the laser beam profile, B is the beam spot-size and I is the area affected by the irradiation. Figure 1c shows the cross-section of the defected surface after the restoration with a beam of the appropriate spot-size and intensity. Both restoration cases refer to the same amount of energy.

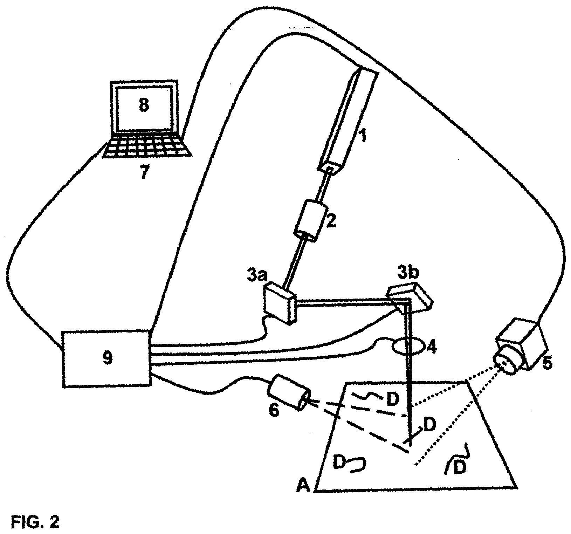

Figure 2 shows a schematic of a laser-based system to mend a defected vitreous area (A) on the basis of the methodology suggested/developed through the present invention. D corresponds to defects. The system may comprise an Irradiation Unit 21, an optical or beam shaping unit 22, a unit for driving the beam in the X direction 23a, a unit for driving the beam in the Y direction 23b, a beam focusing/spot-size adjustment unit 24, an imaging unit 25, a heat emitting unit 26, a computer/data processing unit 27, processing software 28 and system controller 29. The irradiation unit 21 may be a laser, with an emission spectrum that interacts thermally with the object. The optical unit 22 may comprise of one or more optical elements to modify the laser beam shape and/or profile if required. The laser beam driving optical units may be part of a galvanometric system or any other beam positioning and control unit. The optical unit may modify the beam focus and the beam spot-size. The unit may be motorized. The unit may be positioned before or after the beam driving unit. The imaging unit may be a camera that depicts the area of interest (the imaging unit 25 may point to the same area as the one that will be scanned by the beam driving system). The heat emitting unit 26 may preheat the area to be restored (the source may be the same laser that treats the area with the use of a different optical configuration e.g. diverged beam, or a different laser with different optical configuration or any other thermal source). The computer 27 and a tailor - made software 28 may acquire and process data. The system controller 29 may power and control all devices. The tailor-made software may automatically or semi-automatically or manually process images and load processing parameters (preheating time/ power, laser power, laser scanning speed, lens-object distance etc.).

The software may:
o Automatically register the image to the working plane. (Correction of distortion due to different angle of camera axis relatively to laser beam -working area axis).
o Automatically detect any defects based on the camera image.
o Record the coordinates/shape of defects.
o Allow user to select defects to be restored.
o Allow user to manually select defects to be restored that may have not been automatically detected.
o Allow user to manually change/adjust coordinates shape of automatically detected defects.
o Allow user to select process parameters from a database or manually set process parameters.
o Automatically execute the process based on above selected area/parameters.

An example procedure of restoring defects may be as follows:
- The system may be placed against the area to be restored.
- The camera may capture an image of the area that needs to be restored.
- The system may automatically register the image to the working plane.
- The software may process the image and automatically detect defects on the surface and mark the defects on the image.
- The user (e.g. a conservator-restorer) may decide which defects are to be restored.
- Other defected areas not automatically detected may be manually added by the user.
- For each defect to be restored the pattern may be automatically generated (coordinates and shape automatic generation) and loaded to the beam deflecting system.
- The user may modify the automatically extracted coordinates/shape for the defect to be restored.
- Depending on the defect type/tile type pre-set parameters (from a database or from previous tests on objects of the same properties) may be used (these parameters may correspond to the minimum impact to avoid damage).
- The defected area may be preheated, if required.
- The defected area may be processed by the laser beam.
- The defected area may be post-heated, if required.
- Optical examination (camera or microscope) of the result may be performed.
- If the result is successful then next defect may be processed.
- If the result is not successful then the process may be repeated (on the same defect). Modified parameters (e.g. higher/lower laser power, slower/faster scanning speed) may be applied.

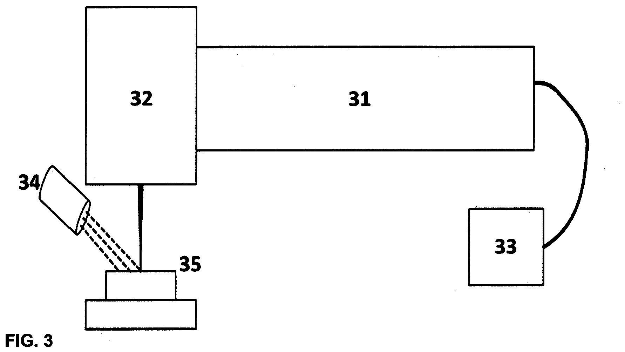

Figure 3 shows an example laser system. The laser system is comprised of a laser source 31 and a galvanometric system 32. Both subsystems are controlled by the same computer 33 in order to drive the laser beam to the desired area and selectively treat the target 35. A heat emitter 34 may also be used during the restoration process. In one specific example, a continuous wave (CW) CO₂ laser has been used for the irradiation of samples. The specific laser has been selected due to its thermal interaction with the treated material. The laser power used for the specific process was 11.5W whereas the velocity of the scanning beam was 21.45mm/sec. Prior to any irradiation each sample is being heated up to 300°C -with the use of hot air blowing device - in order to avoid the appearance of micro-cracks in the restored area due to the abrupt raise and decrease of the temperature (Figure 2) whereas the temperature on the laser beam - glazed surface interaction point reaches up to 900°C, which is the melting temperature of glazes like the ones used in Azulejos tiles. For the above set-up the spot-size is in the range of 0,6mm.

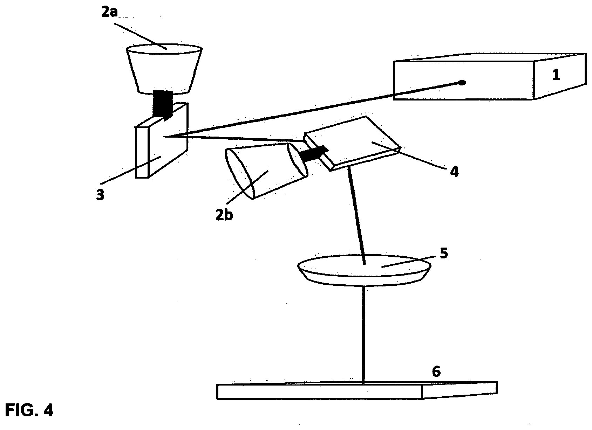

Figure 4 shows a beam driving unit based on a galvanometric system. A laser system 41 emits a laser beam that is reflected at Y-axis mirror 43 driven by Y-axis galvanometer motor 42a. Then, the beam is reflected by X-axis mirror 44 driven by X-axis galvanometer motor 42b. A focusing lens 45 focuses the beam on the treated object 46.

For a specific example a CW CO₂ laser (25W, 10.6µm wavelength) and a fragment of an Azulejo sample have been selected. A crack on the surface of the fragment that goes only through the glazed surface will be processed. The aim of this study is to investigate whether the laser processing leads to a complete filling of the crack.

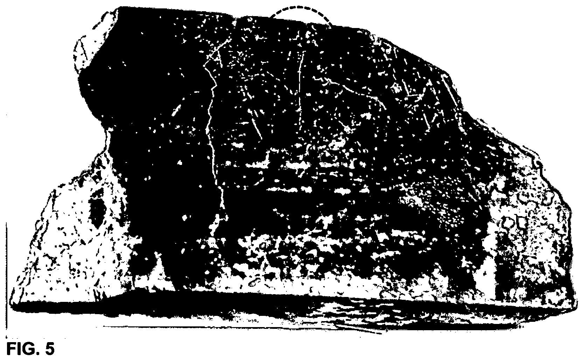

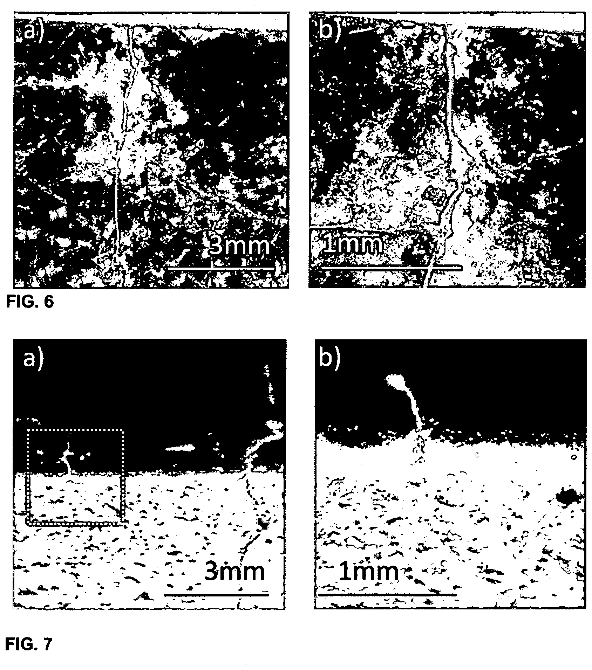

Figure 5 shows an examined fragment where an area with a crack is selected. Figure 6a is a close-up image showing the crack on the selected area of the examined fragment. Figure 6b shows the crack in magnification. Figure 7a shows a cross section of the crack shown in Fig. 6a. Figure 7b shows a magnification of the cross section of the crack shown in Fig. 6b.

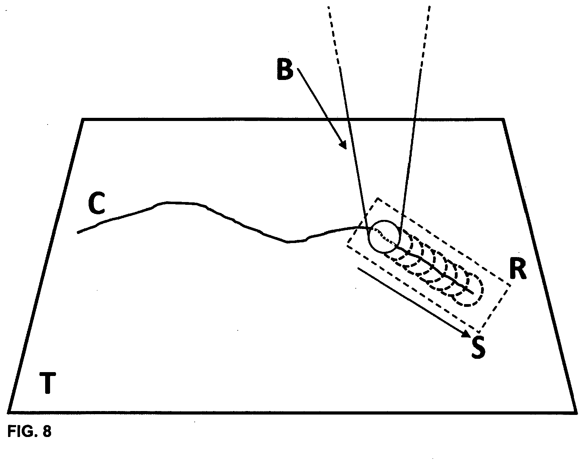

Figure 8 is an illustration of the scanning along a crack. T is the sample tile, C is the crack, R is the area to be restored (dashed rectangle), B is the laser beam and S is the scanning direction. As the spot of the laser beam moves along the path, following the geometry of the crack, the glaze around the crack melts and fuses in the crack area filling and thus restoring the cracked surface.

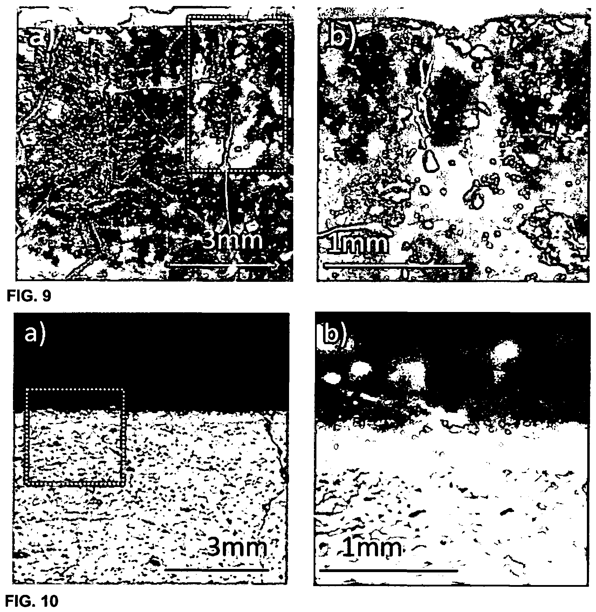

Figure 9a corresponds to Fig. 6a and shows the crack after laser processing. Figure 9b corresponds to Fig. 6b and shows a magnification of the crack after laser processing. Figure 10a corresponds to Fig. 7a and shows a cross section of the crack after laser processing. Finally, Figure 10b corresponds to Fig. 10b and shows a magnification of the cross section of the crack after laser processing.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

Further, although the examples described with reference to the drawings comprise computing apparatus/systems and processes performed in computing apparatus/systems, the invention also extends to computer programs, particularly computer programs on or in a carrier, adapted for putting the system into practice.

## Claims

1. Method of restoring a fissured area of a vitreous surface, comprising:
generating a laser beam;
controlling a first direction and a second direction, perpendicular to the first, of the laser beam;
shaping the spot-size of the laser beam according to a size of the fissured area and based on restoration specifications;
directing the laser beam to the fissured area to melt the vitreous surface around the fissured area and fuse the melted vitreous surface in the fissured area.

2. The method according to claim 1, further comprising thermally heating the fissured area before and/or after the laser beam is directed to the fissured area.

3. The method according to any of claims 1 or 2, further comprising capturing an image comprising the fissured area.

4. The method according to claim 3, further comprising processing the image to automatically detect the fissured area.

5. The method according to any of claims 2 to 4, further comprising generating path instructions to guide the laser beam along the fissured area in response to the detection of the fissured area.

6. A computer program product comprising machine readable instructions to be executed by a device performing a method of amending a fissured area of a vitreous surface according to any of claims 1 to 5.

7. A computer program product according to claim 6, embodied on a storage medium.

8. A computer program product according to claim 7, carried on a carrier signal.

## Patentansprüche

1. Verfahren zur Wiederherstellung eines rissigen Bereichs einer glasartigen Oberfläche, umfassend:
Erzeugen eines Laserstrahls;
Steuern einer ersten Richtung und einer zweiten Richtung senkrecht zu der ersten des Laserstrahls;
Formen der Punktgröße des Laserstrahls gemäß einer Größe des rissigen Bereichs und basierend auf Restaurationsspezifikationen;
Richten des Laserstrahls auf den rissigen Bereich, um die glasartige Oberfläche um den rissigen Bereich herum zu schmelzen und die geschmolzene glasartige Oberfläche in dem rissigen Bereich zu verschmelzen.

2. Verfahren nach Anspruch 1, ferner umfassend das thermische Erwärmen des rissigen Bereichs, bevor und/oder nachdem der Laserstrahl auf den rissigen Bereich gerichtet wird.

3. Verfahren nach einem der Ansprüche 1 oder 2, ferner umfassend das Erfassen eines Bildes, das den rissigen Bereich umfasst.

4. Verfahren nach Anspruch 3, ferner umfassend das Verarbeiten des Bildes, um den rissigen Bereich automatisch zu erkennen.

5. Verfahren nach einem der Ansprüche 2 bis 4, ferner umfassend das Erzeugen von Pfadanweisungen zum Führen des Laserstrahls entlang des rissigen Bereichs als Reaktion auf die Erkennung des rissigen Bereichs.

6. Computerprogrammprodukt, das maschinenlesbare Anweisungen umfasst, die von einer Vorrichtung ausgeführt werden sollen, die ein Verfahren zum Korrigieren eines rissigen Bereichs einer glasartigen Oberfläche nach einem der Ansprüche 1 bis 5 durchführt.

7. Computerprogrammprodukt nach Anspruch 6, das auf einem Speichermedium verkörpert ist.

8. Computerprogrammprodukt nach Anspruch 7, das auf einem Trägersignal getragen wird.

## Revendications

1. Procédé de restauration d'une zone fissurée d'une surface vitreuse, comprenant :
la génération d'un faisceau laser ;
la commande d'une première direction et d'une seconde direction,
perpendiculaire à la première, du faisceau laser ;
la mise en forme de la taille de point du faisceau laser selon une taille de la zone fissurée et en fonction des spécifications de restauration ;
la direction du faisceau laser vers la zone fissurée pour faire fondre la surface vitreuse autour de la zone fissurée et fusionner la surface vitreuse fondue dans la zone fissurée.

2. Procédé selon la revendication 1, comprenant en outre le chauffage thermique de la zone fissurée avant et/ou après que le faisceau laser soit dirigé vers la zone fissurée.

3. Procédé selon l'une quelconque des revendications 1 ou 2, comprenant en outre la capture d'une image comprenant la zone fissurée.

4. Procédé selon la revendication 3, comprenant en outre le traitement de l'image pour détecter automatiquement la zone fissurée.

5. Procédé selon l'une quelconque des revendications 2 à 4, comprenant en outre la génération d'instructions de trajectoire pour guider le faisceau laser le long de la zone fissurée en réponse à la détection de la zone fissurée.

6. Produit de programme informatique comprenant des instructions lisibles par machine à exécuter par un dispositif réalisant un procédé de modification d'une zone fissurée d'une surface vitreuse selon l'une quelconque des revendications 1 à 5.

7. Produit de programme informatique selon la revendication 6, incorporé sur un support de stockage.

8. Produit de programme informatique selon la revendication 7, porté par un signal porteur.
